# EUROPÄISCHE PATENTSCHRIFT

(11) **EP 0 998 019 B1**
(45) Veröffentlichungstag und Bekanntmachung des Hinweises auf die Patenterteilung: **25.02.2009**
(21) Anmeldenummer: 98120574.3
(22) Anmeldetag: 30.10.1998
(51) Int. Cl.: H02M 7/00

(54) **Halbleiter-Schaltungszusammenbau, insbesondere Hochstromumrichter mit niedriger Zwischenkreisspannung**
Semiconductor circuit assembly, in particular for a high current converter with low voltage intermediate circuit
Assemblage circuit semiconducteur, en particulier pour un convertisseur à haut voltage avec un circuit intermédiaire à basse tension

(43) Veröffentlichungstag der Anmeldung: 03.05.2000
(73) Patentinhaber: Continental Automotive GmbH, 30165 Hannover (DE)
(72) Erfinder: Allwang, Reinhard, 92421 Schwandorf (DE); Götze, Thomas, 09113 Chemnitz (DE)

(56) Entgegenhaltungen:
- EP-A- 0 166 968
- EP-A- 0 598 563
- EP-A- 0 688 092
- EP-A- 0 772 379
- DE-C- 19 645 636

## Beschreibung

Die Erfindung bezieht sich auf eine Halbleiter-Schaltungsanordnung, insbesondere Hochstromumrichter mit niedriger Zwischenkreisspannung, gemäß Patentanspruch 1 und ein Verfahren zu deren Zusammenbau gemäß Patentanspruch 14; derartige Schaltungsanordnungen sind insbesondere zum Einsatz in Kraftfahrzeugen zwischen zumindest einem batteriegestützten Niederspannungs-Bordnetz einerseits und einem Starter-Generator als Anlasser bzw. Lader für die jeweilige Batterie andererseits vorgesehen. Sie dienen im Schubbetrieb des Kraftfahrzeuges zur Anpassung von Spannung und Leistung des dann als Generator arbeitenden Starter-Generators an die entsprechenden Betriebsdaten der jeweiligen nachzuladenden Batterie und beim Starten des dann als Motor arbeitenden Starter-Generators mit Hilfe der jeweiligen Batterie zur Gewährleistung eines hinreichenden Start-Drehmomentes mit entsprechend hohem Anfahrstrom.

Als wesentliche Bauteile einer solchen Schaltungsanordnung gelten insbesondere eine Anzahl von Halbleiter-Halbbrücken als Leistungsbauteile, eine Anzahl von Zwischenkreis-Bauelementen, insbesondere Kondensatoren, und eine Anzahl von Steuerelementen, insbesondere Treiberstufen.

Aus der DE 196 45 636 C1 ist eine Halbleiter-Schaltungsanordnung zur Ansteuerung eines Elektromotors bekannt, bei der eine Leistungseinheit mit elektronischen Halbleitern auf der Oberseite eines DCB-Substrats angeordnet und kontaktiert ist, das mit seiner Unterseite unmittelbar auf der Oberfläche einer Kühlereinheit aufliegt; parallel und beabstandet liegt oberhalb des DCB-Substrats eine Trägerplatte, auf deren Oberseite und Unterseite Halbleiter-Bauelemente einer zugehörigen Ansteuereinheit gehaltert und kontaktiert, insbesondere verlötet, sind. Senkrechte, mit dem DCB-Substrat verlötete Kontaktstifte dienen der Kontaktierung zwischen der Leistungseinheit auf dem DCB-Substrat einerseits und der Ansteuereinheit auf der Trägerplatte andererseits. Parallel zu dem DCB-Substrat und der Trägerplatte führen Gleichspannungs-stromschienen durch einen Gehäusekörper nach außen zu dort auf der Oberseite der Kühlereinheit gelagerte Zwischenkreis-Kondensatoren; Anschlußschienen zur Wechsel- bzw. Drehstromseite der Schaltungsanordnung sind senkrecht zum DCB-Substrat und zur Trägerplatte aus dem Gehäusekörper nach außen geführt.

EP-A-0.598.563 offenbart eine Halbleiter-Schaltungsanordnung mit Kontaktstiften, die Leiterplatten verbinden.

Gemäß Aufgabe vorliegender Erfindung soll die Voraussetzung für ein als Großserienprodukt mit geringem Aufwand fertig- und montierbaren niederinduktiven Umrichter, insbesondere Hochstrom-Umrichter mit niedriger Zwischenkreisspannung, geschaffen werden, der bei kompakter Bauart auch rauhen Betriebseinsätzen, wie z.B. in einem Kraftfahrzeug, gewachsen ist.

Die Lösung der vorgenannten Aufgabe gelingt erfindungsgemäß durch eine Halbleiter-Schaltungsanordnung gemäß Patentanspruch 1 bzw. durch ein Verfahren zu deren Zusammenbau gemäß Patentanspruch 14; vorteilhafte Ausgestaltungen der Halbleiter-Schaltungsanordnung sind Gegenstand der Unteransprüche 2-12. In Anspruch 13 ist eine Verwendung der Halbleiter-Schaltungsanordnung definiert.

Der erfindungsgemäße Aufbau einer Halbleiter-Schaltungsanordnung erlaubt durch die einpreßbare Kontaktstift-Anschlußverbindung zwischen dem Substrat in einer ersten Anordnungsebene und der darüberliegenden, vorzugsweise nur an ihrer Oberseite mit Bauelementen zu bestückenden bzw. als Funktionseinheit vormontierbaren Zwischenkreis-Leiterplatte in einer gering beabstandeten zweiten Anordnungsebene eine einfach zu fertigende und zu montierende, aufgrund der gegenseitigen geringen Abstände und direkten Kontaktierung vorteilhaft extrem niederinduktive, auch die Zwischenkreis-Bauelemente mitumfassende Baueinheit. Für die Zwischenkreis-Bauelemente, insbesondere deren Kondensatoren und ggf. Induktivitäten ist eine Kontaktierung mittels Durchkontaktierung ihrer elektrischen fußseitigen Anschlüsse bis zur Unterseite der Zwischenkreis-Leiterplatte und anschließende elektrische Verbindung, insbesondere durch Schwallöten, derart vorgesehen, daß die Zwischenkreis-Leiterplatte mit den aufgenommenen und kontaktierten Zwischenkreis-Bauelementen auf besonders einfache Weise als Vormontageeinheit fertigbar ist.

In insbesondere für einen Einsatz in Kraftfahrzeugen vorteilhafter Weise kann die Vibrationsfestigkeit der Schaltungsanordnung dadurch auf einfache Weise verbessert werden, daß oberhalb zu der Zwischenkreis-Leiterplatte in einer dritten Anordnungsebene eine beabstandete, von einem äußeren Anordnungsrahmen aufgenommene Halterungsplatte zur Positionssicherung der oberen freien Bauenden der Zwischenkreis-Bauelemente, insbesondere durch ein Aufstecken mit formschlüssiger Umfassung, vorgesehen ist; zweckmäßigerweise weist diese Halterungsplatte, insbesondere als Aluminiumplatte, eine gute Wärmeableitung zum äußeren Anordnungsrahmen auf. In weiterer fertigungs- und montagetechnischer Vereinfachung sowie im Sinne einer kompakten Baueinheit ist vorgesehen, auf der Oberseite der Halterungsplatte eine Ansteuer-Leiterplatte anzuordnen, die zur Ansteuerung der Leistungseinheit mit dieser, z.B. über eine flexible Leitung, in Funktionsverbindung steht.

Zum Zwecke einer guten Wärmefestigkeit liegt das Substrat mit seiner Unterseite mittelbar, insbesondere über eine Zwischen-Wärmeleitplatte, auf der Oberfläche einer Kühlereinheit auf, die auch in gut wärmeleitender Verbindung mit dem äußeren Anordnungsrahmen steht und nach einer Ausgestaltung der Erfindung auch als mechanische Halterung für die Zwischenkreis-Leiterplatte mitbenutzt ist. Insbesondere in Anwendung auf ein Kraftfahrzeug, bei dem üblicherweise der eine batterieseitige Gleichspannungspol als Massepol ausgebildet ist, ist zur weiteren Erhöhung der Kompaktheit der Halbleiter-Schaltungsanordnung bei gleichzeitig extrem niederinduktiver Aufbauweise eine Ausbildung des Substrates mit einem Leiterbahnen-Layout sowohl an der Oberseite als auch einem vorzugsweise grobstrukturierten LeiterbahnenLayout an der Unterseite seines Isolations-Zwischenträgers und eine Durch- bzw. Seitenrandkontaktierung zwischen den Leiterbahnen bzw. den Halbleitern der Oberseite einerseits und den als Massepotential rückleitenden, zur Kühleinheit unisolierten Leiterbahnen der Unterseite vorgesehen.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: in einem Schnittbild einen Hochstrom-Umrichter, insbesondere für ein Kraftfahrzeug;
- FIG 2: eine Ausschnittvergrößerung II aus FIG 1;
- FIG 3: den Hochstrom-Umrichter gemäß FIG 1 im Schnittverlauf III-III;
- FIG 4: den Hochstrom-Umrichter gemäß FIG 1 im Schnittverlauf IV-IV.

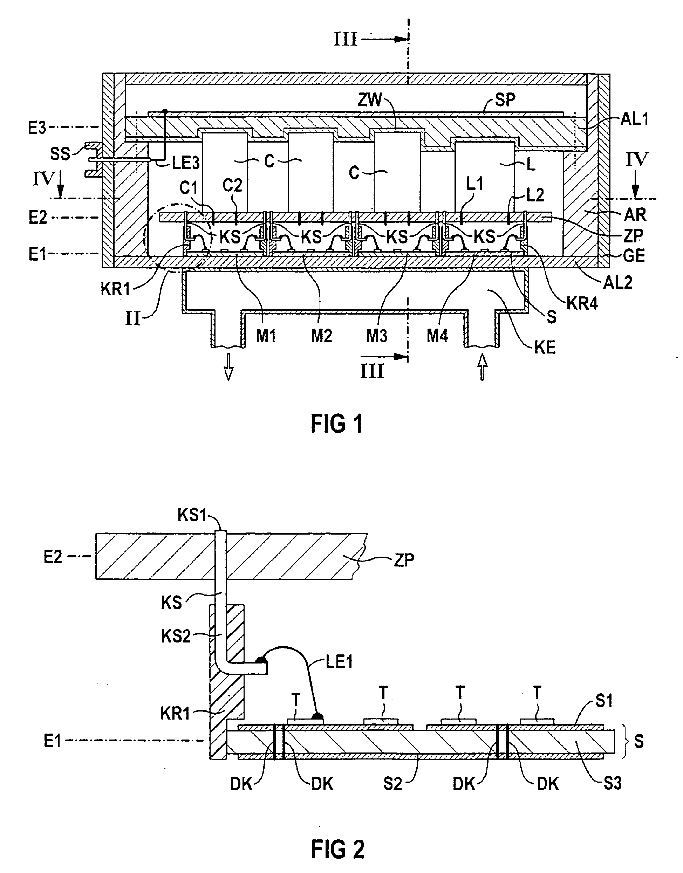

In einer ersten Anordnungsebene E1 ist eine Leistungseinheit mit vier Modulen M1-M4, bestehend aus jeweils mit Halbleitern T bestückten, von einem Kunststoffrahmen KR1 bzw. KR2 bzw. KR3 bzw. KR4 umfaßten DCB-Substraten S angeordnet. Jedes der Module M1-M3 ist jeweils als Teil einer Umrichter-Brückenschaltung je einem Brückenzweig mit Anschluß an eine Phase U bzw. V bzw. W eines Starter-Generators SG zugeordnet; das Modul M4 enthält den Leistungsteil eines Spannungswandlers. Die Kunststoffrahmen KR1-KR4 sind mit Kontaktstiften KS, insbesondere durch Einstecken bzw. Eingießen, bestückt und in üblicher Bond-Technik mit den auf den DCB-Substraten verlöteten Halbleitern T über Leitungen LE1 - wie insbesondere aus der Detailvergrößerung gemäß FIG 2 ersichtlich - verbunden. Die mit ihrem unteren Ende KS2 in dem jeweiligen Kunststoffrahmen KR1-KR4 gehaltenen Kontaktstifte KS ragen mit einem freien Ende KS1 aus dem Kunststoffrahmen, insbesondere senkrecht nach oben, heraus.

Die freien Enden KS1 der Kontaktstifte KS sind zur Kontaktierung mit korrespondierenden Kontaktaufnahmen KA in einer Zwischenkreis-Leiterplatte ZP, insbesondere einer Multilayer-Leiterplatte, vorgesehen, die betriebsmäßig in geringem Abstand zu der ersten Anordnungsebene E1 oberhalb der Substrate S in einer zweiten Anordnungsebene E2 angeordnet ist. Diese Zwischenkreis-Leiterplatte ZP ist zweckmäßigerweise vor ihrem Zusammenbau mit der ersten Anordnungsebene E1 als Vormontageeinheit mit Zwischenkreis-Bauelementen, insbesondere mit Kondensatoren C und Induktivitäten L, dadurch bestückt, daß diese Zwischenkreis-Bauelemente C;L mit ihren fußseitigen Kontaktenden C1;C2 bzw. L1;L2 bis zu einem Layout-Anschluß auf der Unterseite der Zwischenkreis-Leiterplatte ZP durchgesteckt und dort durch einfaches Schwallöten mit den entsprechenden Leiterbahnen kontaktiert sind. Beim Zusammenbau der derart zuvor mit den Zwischenkreis-Bauelementen C;L bestückten und kontaktierten Zwischenkreis-Leiterplatte ZP einerseits mit der ersten Anordnungsebene E1 andererseits werden die freien Kontaktenden KS1 der in den Kunststoffrahmen KR1-KR4 der Module M1-M4 positionierten Kontaktstifte KS in die korrespondierenden Kontaktaufnahmen KA der Zwischenkreis-Leiterplatte ZP selbsttätig einpreßkontaktiert.

Oberhalb der freien Bauenden der Zwischenkreis-Bauelemente C;L ist in einer dritten Anordnungsebene E3 eine Halterungsplatte AL1 seitlich in einem Anordnungsrahmen AR, z.B. mittels Schraubbefestigung, fixiert. In vorteilhafter Weise übergreift bzw. umgreift diese Halterungsplatte AL1 formschlüssig die freien Bauenden der Zwischenkreis-Bauelemente C;L derart, daß diese auch gegenüber stärkeren Stoßbelastungen vibrationsfest gesichert sind. Nach einer Ausgestaltung der Erfindung ist die Halterungsplatte AL1 als Wärmeleitplatte, insbesondere als Aluminiumplatte, ausgebildet.

Nach einer weiteren Ausgestaltung der Erfindung ist zwischen der Halterungsplatte AL1 und den von dieser positionssichernd umfaßten freien Bauenden der Zwischenkreis-Bauelemente C;L eine wärmeleitende elastische Zwischenlage ZW. insbesondere ein Wärmeleitgummi, angeordnet, derart daß von den Zwischenkreis-Bauelementen C;L Wärme über die formanpassbare Zwischenlage ZW und die Halterungsplatte AL1 an den äußeren Anordnungsrahmen AR weitergegeben werden kann, der seinerseits in vorteilhafter Weise in gut wärmeleitender Verbindung mit einer Zwischen-Wärmeleitplatte AL2, insbesondere Aluminiumplatte, steht, über welche auch die Module M1-M4 bzw. deren Substrat S vorteilhaft wärmeabgebend auf der Oberfläche einer Kühleinheit KE aufliegen.

Die Zwischen-Wärmeleitplatte AL2 dient auch der mechanischen Fixierung der ersten und zweiten Anordnungsebene E1 bzw.E2. Dazu dienen z.B. hier nicht dargestellte Schrauben, die auf der Zwischenkreis-Leiterplatte ZP aufliegen, durch Schraublöcher SR1-SR4 der Kunststoffrahmen KR1-KR4 der Module M1-M4 hindurchreichen und in die Zwischen-Wärmeleitplatte AL2 einschraubbar sind.

Zum Schutz gegen eine Wärmebelastung von außen ist die gesamte Schaltungsanordnung durch ein zu dem Anordnungsrahmen AR äußeres, thermisch isolierendes Gehäuse GE eingekapselt.

In weiterer fertigungs- und montagetechnischer Vereinfachung und im Sinne einer möglichst kompakten Baueinheit ist die Halterungsplatte AL1 gleichzeitig dazu benutzt, auf ihrer Oberseite eine Ansteuereinheit, insbesondere in Form einer Ansteuer-Leiterplatte SP, aufzunehmen; die Ansteuer-Leiterplatte SP ist über eine Leitungsverbindung LE2 mit der Zwischenkreis-Leiterplatte ZP und über die Kontaktstifte KS mit der Leistungseinheit der Module M1-M4 sowie über eine Leitungsverbindung LE3 mit einem äußeren Signal-Stecker SS kontaktierbar ist.

Die einfach zu montierende und zu fixierende Halterungsplatte AL1 vereint also die vibrationsteste Fixierung der Zwischenkreis-Bauelemente C;L und der Ansteuer-Leiterplatte SP sowie die Wärmeentlastung dieser Bauelemente über den Anordnungsrahmen AR an die Kühleinheit KE.

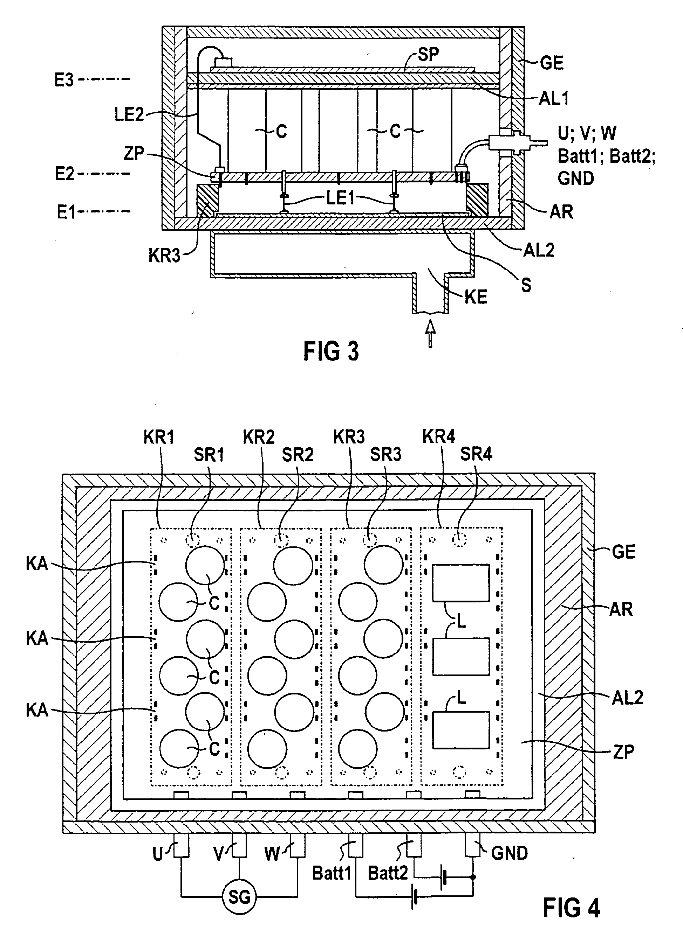

Für eine besonders einfache und nur kurze Leitungswege erfordernde Anschlußmöglichkeit der Wechsel- bzw. Drehstromseite des Starter-Generators bzw. der Gleichstromseite der Batterie sind entsprechende Wechsel- bzw. Drehstrom-Anschlüsse U;V;W des Stater-Generators SG einerseits und Gleichstrom-Anschlüsse Bat1;Bat2;GND für zwei Bordnetze andererseits - wie insbesondere aus FIG 3 ersichtlich - von einem seitlichen Gehäuseanschluß auf kurzem Weg zu der Zwischenkreis-Leiterplatte ZP geführt.

Ausgehend von der Erkenntnis, daß in einem Kraftfahrzeug üblicherweise einer der beiden Gleichstrom-Anschlüsse, vorzugsweise der negative Gleichstrom-Anschluß einen Massepotential-Anschluß GND bildet, ist im Sinne einer noch größeren Kompaktheit bei gleichzeitig durch besonders kurze Anschlußwege verminderbarer Induktivität - wie insbesondere aus der vergrößerten Detaildarstellung gemäß FIG 2 ersichtlich - eine Durchkontaktierung des Substrats S der Module M1-M2 zwischen der oberen Substratebene S1 und der unteren Substratebene S2 durch den Isolations-Zwischenträger S3, insbesondere einen Keramik-Zwischenträger, mittels elektrischer Verbindungen DK derart vorgesehen, daß die Massekontakt-Verbindungen der auf der Oberseite des Substrats S angeordneten Halbleiter-Bauelementen T über Kontaktbahnen DK zu der, vorzugsweise im Sinne grobstrukturierter Massepotential-Leiterbahnen ausgebildeten, Unterseite S2 des Substrates S geführt sind; im vorliegenden Fall wird davon ausgegangen, daß der negative Massepotential-Anschluß GND und die Kühleinheit KE das gleiche Spannungs-Potential aufweisen.

## Patentansprüche

1. Halbleiter-Schaltungsanordnung enthaltend:
- eine erste Anordnungsebene (E1) mit einer Leistungseinheit mit auf der Oberseite eines Substrats (S), insbesondere eines DCB-Substrates, angeordneten und mit diesem kontaktierten Halbleitern (T), wobei das Substrat (S) innerhalb zumindest eines elektrisch isolierenden Rahmens (KR1-KR4), insbesondere Kunststoff-Rahmens, aufgenommen ist;
- eine zweite, oberhalb zu der ersten gering beabstandeten, Anordnungsebene (E2) mit auf der Oberseite einer Leiterplatte (ZP), insbesondere einer Multilayer-Leiterplatte, angeordneten und mit dieser kontaktierten Bauelementen (C;L);
- eine gegenseitige elektrische Funktions-Kontaktverbindung zwischen der ersten Anordnungsebene (E1) und der zweiten Anordnungsebene (E2) mittels aus der ersten Anordnungsebene (E1) vorstehenden und an der zweiten Anordnungsebene (E2) kontaktierten Kontaktstiften (KS),
**dadurch gekennzeichnet, dass** die Leiterplatte (ZP) als Zwischenkreis-Leiterplatte und die mit dieser kontaktierten Bauelemente (C;L) als Zwischenkreis-Bauelemente ausgebildet sind, dass die Kontaktstifte (KS) in den Rahmen (KR1-KR4) aufgenommen und somit gehalten sind, und dass freie Kontaktstift-Enden (KS1) gegen die zweite Anordnungsebene (E2) vorstehen und in korrespondierende Kontaktaufnahmen (KA) der zweiten Anordnungsebene (E2) eingepresst sind.

2. Halbleiter-Schaltungsanordnung nach Anspruch 1, enthaltend:
- eine Kontaktierung der Zwischenkreis-Bauelemente (C;L) mit der Zwischenkreis-Leiterplatte (ZP) der zweiten Anordnungsebene (E2) mittels Durchkontaktierung der elektrischen Anschlüsse (C1,C2;L1,L2) der ZwischenkreisBauelemente (C;L) bis zur Unterseite der Zwischenkreis-Leiterplatte (ZP) und Verbindung, insbesondere Schwallötung, mit entsprechenden Unterseite-Leiterbahnen.

3. Halbleiter-Schaltungsanordnung Anspruch 1 oder 2, enthaltend:
- eine dritte, oberhalb zu der ersten beabstandete, Anordnungsebene (E3) mit einer von einem äusseren Anordnungsrahmen (AR) aufgenommenen Halterungsplatte (AL1), insbesondere gut wärmeleitende Aluminiumplatte;
- mit einer Positionssicherung der ihrem Kontaktierungsende abgewandten freien Bauenden der Zwischenkreis-Bauelemente (C;L) durch die Halterungsplatte (AL1).

4. Halbleiter-Schaltungsanordnung nach Anspruch 3, enthaltend:
- eine formschlüssige, insbesondere beim Zusammenbau der zweiten und dritten Anordnungsebene (E2 bzw. E3), auf die freien Bauenden aufsteckbare Umfassung der Zwischenkreis-Bauelemente (C;L).

5. Halbleiter-Schaltungsanordnung nach Anspruch 3 oder 4, enthaltend:
- eine gut wärmeleitende elastische Zwischenlage (ZW), insbesondere ein Wärmeleitgummi, zwischen der Halterungsplatte (AL1) und den freien Bauenden der Zwischenkreis-Bauelemente (C;L).

6. Halbleiter-Schaltungsanordnung nach einem der Ansprüche 3-5, enthaltend:
- eine oberhalb der Halterungsplatte (AL1) von dieser aufgenommen, mit der Leistungseinheit der ersten Anordnungsebene (E1) in Funktionsverbindung stehende Ansteuereinheit, insbesondere auf einer Ansteuer-Leiterplatte (SP).

7. Halbleiter-Schaltunganordnung nach einem der Ansprüche 1-6, enthaltend:
- zu der zweiten Anordnungsebene (E2), insbesondere deren Zwischenkreis-Leiterplatte (ZP), geführte äussere Wechsel- bzw. Drehstromanschlüsse (U;V;W) bzw. Gleichstromanschlüsse (Battl;Batt2;GND).

8. Halbleiter-Schaltungsanordnung nach einem der Ansprüche 1-7, enthaltend:
- eine Ausbildung des Substrats (S) mit einem Leiterbahnen-Layout sowohl an der Oberseite (S1) als auch an der Unterseite (S2) seines Isolations-Zwischenträgers (S3), insbesondere Keramikträgers;
- eine Durch- bzw. Seitenrand-Kontaktierung zwischen den Leiterbahnen der Oberseite (S1) einerseits und der Unterseite (S2) andererseits.

9. Halbleiter-Schaltungsanordnung nach Anspruch 8, enthaltend:
- eine Ausbildung der Unterseite (S2) des Substrats (S) als ein Gleichstrom-Anschluss, insbesondere als Massepotential-Anschluss (GND), der Leistungseinheit.

10. Halbleiter-Schaltungsanordnung nach einem der Ansprüche 1-9, enthaltend:
- eine mittelbare, insbesondere über eine Zwischen-Wärmeleitplatte (AL2), Auflage des Substrats (S) auf der Oberfläche einer Kühleinheit (KE).

11. Halbleiter-Schaltungsanordnung nach Anspruch 10, enthaltend:
- eine unmittelbare bzw. mittelbare gut wärmeleitende Verbindung zwischen einem äusseren Anordnungsrahmen (AR) und der Kühleinheit (KE) bzw. der Zwischen-Wärmeleitplatte (AL2).

12. Halbleiter-Schaltungsanordnung nach einem der Ansprüche 1-11, enthaltend:
- ein, insbesondere gegen Aussenwärme abschirmendes, umgebendes Gehäuse (GE).

13. Verwendung der Halbleiter-Schaltungsanordnung nach einem der Ansprüche 1-12 als Umrichter zwischen einem batteriegestützten Gleichstrom-Bordnetz (Batt1;Batt2;GND) und einem Starter-Generator (SG) in einem Kraftfahrzeug.

14. Verfahren zum Zusammenbau einer Halbleiter-Schaltungsanordnung nach einem der Ansprüche 1-12, enthaltend die Verfahrensschritte:
- Bestücken und Kontaktieren des Substrates (S) mit den Halbleitern (T) sowie deren Kontaktieren mit den Kontaktstiften (KS) in dem das bestückte Substrat (S) aufnehmenden Rahmen (KR1-KR4) im Sinne einer ersten Vormontage-Baueinheit;
- Bestücken und Kontaktieren der Zwischenkreis-Leiterplatte (ZP) zumindest mit den Zwischenkreis-Bauelementen (C;L) im Sinne einer zweiten Vormontage-Baueinheit;
- Zusammenbau der ersten Vormontage-Baueinheit mit der zweiten Vormontage-Baueinheit mit dabei selbstätiger Einpresskontaktierung der Kontaktstifte (KS) der ersten Vormontage-Baueinheit mit korrespondierenden Kontaktaufnahmen (KA) der zweiten Vormontage-Baueinheit;
- Einbringen und Fixieren einer, mit einer Ansteuer-Leiterplatte (SP) versehenen Halterungsplatte (AL1) in einem äusseren Anordnungsrahmen (AR) in gegenseitiger Betriebsendstellung mit gleichzeitiger vibrationsfester Umfassung der Bauenden der Zwischenkreis-Bauelemente (C;L) und Kontaktierung zwischen der Ansteuer-Leiterplatte (SP) und der Zwischenkreis-Leiterplatte (ZP).

## Claims

1. Semiconductor circuit arrangement, containing:
- a first arrangement plane (E1) with a power unit with semiconductors (T) arranged on the upper side of a substrate (S), especially a DCB substrate and making contact therewith, with the substrate (S) being accommodated within at least one electrically insulating frame (KR1-KR4), in particular plastic frame;
- a second arrangement plane (E2) arranged at a slight distance above the first plane, with components (c; L) arranged on the upper side of a circuit board (ZP), in particular a multilayer circuit board, and making contact therewith;
- a mutual electric functional contact connection between the first arrangement plane (E1) and the second arrangement plane (E2) by means of contact pins (KS) protruding from the first arrangement plane (E1) and making contact with the second arrangement plane (E2),
**characterised in that** the circuit boards (ZP) are embodied as intermediate circuit boards and the components (C; L) making contact therewith are embodied as intermediate components such that the contact pins (KS) are accommodated and thus held in the frames (KR1-KR4) and that free contact pin ends (KS1) protrude against the second arrangement plane (E2) and are pressed into corresponding contact receptacles (KA) in the second arrangement plane (E2).

2. Semiconductor circuit arrangement according to claim 1, containing
- a contacting between the intermediate circuit components (C; L) and the intermediate circuit board (ZP) of the second arrangement plane (E2) by means of through contacting of the electrical terminals (C1, C2; L1, L2) of the components (C; L) to the underside of circuit board (ZP) and connection, in particular wave soldering, to corresponding underside conductor tracks.

3. Semiconductor circuit arrangement according to claim 1 or 2, containing
- a third arrangement plane (E3) spaced above the first arrangement plane with a retaining plate (AL1) especially a highly heat-conducting aluminium plate, held by an outer arrangement frame (AR);
- with a positioning locking device on the free-ends facing away from the contacting end of the intermediate circuit components (C;L) by the retaining plate (AL1).

4. Semiconductor circuit arrangement according to claim 3, containing
- a form-fit enclosure of the intermediate circuit components (C;L) which can be plugged onto the free-ends especially when the second and third arrangement planes (E2 and/or E3) are assembled.

5. Semiconductor circuit arrangement according to claim 3 or 4, containing:
- an elastic intermediate layer (ZW) with good heat conductivity, in particular a heat-conducting rubber, between the retaining plate (AL1) and the free-ends of the intermediate circuit components (C; L).

6. Semiconductor circuit arrangement according to one of claims 3-5, containing:
- a driver unit held by the retaining plate (AL1) thereabove and actively connected to the power unit of the first arrangement plane (E1), in particular on a driver circuit board (SP).

7. Semiconductor circuit arrangement according to one of claims 1 to 6, containing;
- exterior alternating and/or three-phase current terminals (U;V;W) and/or DC terminals (Batt1; Batt2; GND) routed to the second arrangement plane (E2), in particular the intermediate circuit board (ZP) thereof.

8. Semiconductor circuit arrangement according to one of claims 1-7, containing;
- an embodiment of the substrate (S) with a conductor track layout both on the upper side (S1) as well as on the lower side (S2) of its insulation subcarrier (S3), in particular ceramic carrier;
- a through and/or side edge connection between the conductors of the upper side (S1) on the one hand and the lower side (S2) on the other hand.

9. Semiconductor circuit arrangement according to claim 8, containing
- an embodiment of the lower side (S2) of the substrate (S) as a DC terminal, in particular as the ground potential terminal (GND), of the power unit.

10. Semiconductor circuit arrangement according to one of claims 1-9, containing;
- an indirect support of the substrate (S) in particular over an intermediate heat-conducting plate on the surface of a cooling unit (KE).

11. Semiconductor circuit arrangement according to claim 10, containing:
- a direct or indirect highly heat-conducting connection between an outer arrangement frame (AR) and the cooling unit (KE) and/or the intermediate heat-conducting plate (AL2).

12. Semiconductor circuit arrangement according to one of claims 1-11, containing:
- a surrounding housing (GE) which especially shields against exterior heat.

13. Use of the semiconductor circuit arrangement according to one of claims 1-12 as a converter between a battery-assisted DC vehicle electrical system (Batt1; Batt2; GND) and a starter generator (SG) in a motor vehicle.

14. Method for assembling a semiconductor circuit arrangement according to one of claims 1-12, containing the method steps:
- equipping and contacting the substrate (S) with the semiconductors (T) and the contacting thereof to the contact pins (KS) in the frame (KR1-KR4) accommodating the equipped substrate (S) in the sense of a first preassembly contact unit;
- equipping and contacting the intermediate circuit board (ZP) at least with the intermediate circuit components (C; L) in the sense of a second preassembly contact unit.
- assembling the first preassembly contact unit with the second preassembly contact unit with an autonomous press-in contacting of the contact pins (KS) of the first preassembly contact unit with corresponding contact receptacles (KA) of the second preassembly contact unit;
- introducing and fixing a retaining plate (AL1) provided with a driver circuit board (SP) in an exterior arrangement frame (AR) in a mutual operating end position with a simultaneously vibrationally-stable enclosure of the free-ends of the intermediate circuit components (C; L) and contacting between the driver circuit board (SP) and the intermediate circuit board.

## Revendications

1. Structure de circuit à semi-conducteur comprenant :
- un premier plan de structure (E1) comprenant une unité de puissance qui comprend des semi-conducteurs (T) disposés sur la face supérieure d'un substrat (S), en particulier d'un substrat DCB et mis en connexion avec ce dernier, le substrat (S) étant logé à l'intérieur d'au moins un cadre isolant de l'électricité (KR1-KR4), en particulier d'un cadre en matière plastique ;
-- un deuxième plan de structure (E2) placé à petite distance au-dessus du premier, qui comprend des composants (C ; L) disposés sur la face supérieure d'une plaquette (ZP), en particulier d'une plaquette multicouche, et mis en connexion avec cette dernière ;
-- un raccordement mutuel de contact électrique de fonction entre le premier plan de structure (E1) et le deuxième plan de structure (E2), au moyen de broches de contact (KS) en saillie par rapport au premier plan de structure (E1) et mises en connexion sur le deuxième plan de structure (E2),
**caractérisée en ce que** la plaquette (ZP) est constituée par une plaquette de circuit intermédiaire et les composants (C ; L) mis en connexion avec cette plaquette sont constitués par des composants de circuit intermédiaire, **en ce que** les broches de contact (KS) sont logées dans le cadre (KR1-KR4) et tenues par ce moyen et **en ce que** les extrémités libres des broches de contact (KS1) sont en saillie par rapport au deuxième plan de structure (E2) et sont emmanchées dans des logements de contact correspondants (KA) du deuxième plan de structure (E2).

2. Structure de circuit à semi-conducteur selon la revendication 1, comprenant :
- une mise en connexion des composants de circuit intermédiaire (C ; L) avec la plaquette de circuit intermédiaire (ZP) du deuxième plan de structure (E2) par traversée des connexions électriques (C1, C2 ; L1, L2) des composants de circuit intermédiaire (C ; L) jusqu'à la face inférieure de la plaquette de circuit intermédiaire (ZP), et par raccordement, en particulier par soudage à la vague, avec des pistes conductrices correspondantes de la face inférieure.

3. Structure de circuit à semi-conducteur selon la revendication 1 ou 2, comprenant :
-- un troisième plan de structure, placé à distance au-dessus du premier, comprenant une plaque de fixation (AL1), en particulier une plaque d'aluminium bonne conductrice de la chaleur, tenue par un cadre de structure extérieur (AR) ; la position des extrémités de montage libres des composants de circuit intermédiaire (C ; L.) qui sont éloignées de leur extrémité de mise en connexion étant immobilisée par la plaque de fixation (AL1) .

4. Structure de circuit à semi-conducteur selon la revendication 3, comprenant :
- un encadrement des composants de circuit intermédiaire (C ; L) opérant par sûreté de forme, qui peut être emboîté sur les extrémités de montage libres, en particulier lors de l'assemblage des deuxième et troisième plans de structure (E2, E3).

5. Structure de circuit à semi-conducteur selon la revendication 3 ou 4, comprenant :
-- une couche intermédiaire élastique bonne conductrice de la chaleur (ZW), en particulier un caoutchouc conducteur de la chaleur, entre la plaque de fixation (AL1) et les extrémités de montage libres des composants de circuit intermédiaire (C ; L).

6. Structure de circuit à semi-conducteur selon une des revendications 3 à 5, comprenant :
-- une unité d'excitation située au-dessus de la plaque de fixation (AL1) logée par cette dernière, en liaison fonctionnelle avec l'unité de puissance du premier plan de structure (E1), en particulier sur une plaquette d'excitation (SP).

7. Structure de circuit à semi-conducteur selon l'une des revendications 1 à 6, comprenant :
- des connexions extérieures de courant alternatif ou triphasé (U;V;W) ou connexions de courant continu (Batt ; Batt2 ; GND) menant au deuxième plan de structure (E2), en particulier à la plaquette de circuit intermédiaire (ZP).

8. Structure de circuit à semi-conducteur selon l'une des revendications 1 à 7, comprenant :
- une configuration du substrat (S) comportant un tracé des pistes conductrices aussi bien sur la face supérieure (S1) que sur la face inférieure (S2) de son support intermédiaire isolant (S3), en particulier céramique ;
- une mise en connexion par métallisation des trous ou des bords latéraux entre les pistes conductrices de la face supérieure (S1), d'une part et de la face inférieure (S2) d'autre part.

9. Structure de circuit à semi-conducteur selon la revendication 8, comprenant :
- une configuration de la face inférieure (S2) du substrat (S.) de l'unité de puissance sous la forme d'une connexion à courant continu, en particulier d'une connexion de potentiel de masse (GND).

10. Structure de circuit à semi-conducteur selon l'une des revendications 1 à 9, comprenant :
- un appui indirect du substrat (S.) sur la surface d'une unité de refroidissement (KE), en particulier par l'intermédiaire d'une plaque intermédiaire conductrice de la chaleur (AL2).

11. Structure de circuit à semi-conducteur selon la revendication 10, comprenant :
- une liaison directe ou indirecte, bonne conductrice de la chaleur, entre un cadre de structure extérieur (AR) et l'unité de refroidissement (KE) ou la plaque intermédiaire conductrice de la chaleur (AL2).

12. Structure de circuit à semi-conducteur selon l'une des revendications 1 à 11, comprenant :
- un boîtier d'enceinte (G. E.) protégeant en particulier en particulier de la chaleur extérieure.

13. Utilisation de la structure de circuit à semi-conducteur selon l'une des revendications 1 à 12 en tant que convertisseur entre un réseau de bord à courant continu alimenté par batterie (Batt1 ; Batt2 ; GND) et un démarreur-génératrice (SG) dans un véhicule automobile.

14. Procédé pour la construction d'une structure de circuit à semi-conducteur selon l'une des revendications 1 à 12, comprenant les étapes de procédé suivantes :
-- garnir et mettre en connexion le substrat (S.) avec les semi-conducteurs (T), ainsi que mettre ces derniers en connexion avec les broches de contact (KS) dans le cadre (KR1-KR 4) qui reçoit le substrat garni (S), pour former une première unité de construction de prémontage ;
- garnir et mettre en connexion la plaquette de circuit intermédiaire (ZP), au moins avec les composants de circuit intermédiaire (C ; L.) pour former la deuxième unité de construction de prémontage ;
-- assembler la première unité de construction de prémontage à la deuxième unité de construction de prémontage, avec mise en connexion automatique par emmanchement des broches de contact (KS) de la première unité de construction de prémontage avec des logements de contact correspondants (KA) de la deuxième unité de construction de prémontage;
-- introduire et fixer une plaque de fixation (AL1) munie d'une plaquette d'excitation (SP) dans un cadre de structure extérieur (AR) dans une position finale de fonctionnement mutuel avec encadrement simultané résistant aux vibrations des extrémité de montage des composants de circuit intermédiaire (C ; L) et mise en connexion entre la plaquette d'excitation (SP) et la plaquette de circuit intermédiaire (ZP).
